# EUROPÄISCHE PATENTSCHRIFT

(11) **EP 0 668 378 B1**
(45) Veröffentlichungstag und Bekanntmachung des Hinweises auf die Patenterteilung: **14.04.1999**
(21) Anmeldenummer: 95101603.9
(22) Anmeldetag: 07.02.1995
(51) Int. Cl.: D01F 2/00, C08J 5/18

(54) **Verfahren zur Herstellung von Fasern aus Zellulose**
Process for the production of fibers from cellulose
Procédé pour la fabrication de fibres à base de cellulose

(30) Priorität: 15.02.1994 DE 4404714
(43) Veröffentlichungstag der Anmeldung: 23.08.1995
(73) Patentinhaber: HOECHST AKTIENGESELLSCHAFT, 65929 Frankfurt am Main (DE)
(72) Erfinder: Huber, Bernd, Dr., D-93309 Kelheim (DE); Kinseher, Richard, D-93309 Kelheim (DE)
(74) Vertreter: Zounek, Nikolai, Dipl.-Ing.

(56) Entgegenhaltungen:
- WO-A-91/16357
- GB-A- 605 305
- US-A- 2 129 052
- US-A- 3 482 011
- US-A- 4 983 730
- INDUSTRIAL AND ENGINEERING CHEMISTRY, Bd. 49, Seite 79 C. J. MALM ET AL. 'Far-Hydrolyzed Cellulose Acetates'
- MACROMOLECULES, Bd. 24, WASHINGTON DC, US, Seite 3060 CHARLES M. BUCHANAN ET AL. 'Preparation and Characterization of Cellulose Monoacetates: The Relationship between Structure and Water Solubility'

## Beschreibung

Die Erfindung betrifft ein Verfahren zur Herstellung von Fasern aus Zellulose mit Hilfe von speziellen Zelluloseestern.

Die Verwendung von Zellulosederivaten zur Herstellung von zellulosischen Fasern ist bekannt. Üblicherweise werden Zellulosexanthogenate eingesetzt, die in alkalischer Lösung versponnen und mit starken Säuren zu Zellulose regeniert werden. Dieser Prozeß wird z.B. in : Dr. K. Götze, "Chemiefasern nach dem Viskoseverfahren", Springer Verlag 1967, beschrieben.

Die Nachteile dieses Verfahrens sind die Bildung großer Mengen von Nebenprodukten, wie Natriumsulfat und Schwefelwasserstoff.

Vorgeschlagen wurde auch, die Schwefelderivate durch Stickstoffderivate zu ersetzen. Ein Carbamatprozeß wird beispielsweise von O.T. Turunen, J. Fors und J.I. Huttunen in Lenzinger Ber. 59 (1985), S. 111 beschrieben. Der Nachteil auch dieses Verfahrens ist der hohe Anfall von Natriumsulfat.

Es sind weiterhin Verfahren zur Herstellung zellulosischer Fasern bekannt, bei denen aus organischen Lösungsmitteln gesponnene Zelluloseacetatfasern (2,5-bzw. 3-Acetate) anschließend verseift werden. Beispiele dafür finden sich in der US-A-4,464,323.

Der Nachteil dieser Verfahren ist der hohe Anfall an Natriumacetat.

In Industrial and Engineeriiig Chemistry, 49(1), S. 79-83 (1957) werden Herstellung, Eigenschaften und Anwendungen von stark hydrolysierten Zelluloseacetaten beschrieben. Eine Regenerierung derartiger Derivate zu Zellulose wird nicht offenbart.

Aus der US-A-3,482,011 ist ein Trockenspinnverfahren für Zellulosefasern bekannt. Das Verspinnen erfolgt aus Gemischen enthaltend wassermischbare Lösungsmittel. Das Verspinnen aus Wasser führt zu Problemen. Eine Regenerierung der erhaltenen Fasern zu Zellulose wird nicht offenbart.

In der US-A-4,983,730 werden Zelluloseacetatmischungen aus Komponenten verschiedenen Molekulargewichts sowie die Herstellung von Fasern aus derartigen Mischungen beschrieben. Ein Trockenspinnverfahren wird nicht offenbart.

Ein neues Verfahren zur Herstellung zellulosischer Faser beruht auf der direkten Lösung von Zellstoff in N-Methylmorpholin-N-oxid und einem nachfolgenden Naßspinnprozeß. Ein solches Verfahren wird beispielsweise in EP-A-0 490 870 beschrieben. Der Nachteil dieses Verfahrens ist, daß Lösungsmittelreste in der Faser verbleiben, die beispielsweise bei einer Verwendung in Medizinal- oder Hygienebereichen stören können.

Es besteht also immer noch ein Bedarf nach einem nebenproduktarmen Verfahren zur Herstellung von Fasern aus Zellulose, insbesondere nach einem Verfahren, das ohne die Bildung von großen Mengen von Nebenprodukten arbeitet und bei dem insbesondere keine organischen Lösungsmittel zum Einsatz kommen.

Wir haben gefunden, daß sich bestimmte wasserlösliche Zelluloseester, zur Herstellung von Fasern aus Zellulose nach dem Trockenformverfahren aus ausgewählten Lösungen eignen.

Der Gegenstand der Erfindung ist in Anspruch 1 definiert.

Diese Zelluloseester lassen sich chemisch und/oder thermisch, gegebenenfalls unter Einsatz von Katalysatoren leicht zu Zellulose regenieren (hydrolysieren).

Wasserlösliche Zelluloseester sind bekannt. Wasserlösliche Zelluloseacetate werden beispielsweise in Ullmann, "Enzyklopädie der technischen Chemie", Band 9 (1975), Seite 233-238 beschrieben.

Nach dem erfindungsgemäßen Verfahren werden spezielle Zelluloseester in Wasser, wasserlöslichen Alkoholen oder wasserlöslichen Ketonen oder deren Mischungen mit Wasser zu einer viskosen Ausformlösung gelöst, filtriert und nach einem Trockenformverfahren zu Fasern aus Zelluloseestern verarbeitet.

Als Alkohole eignen sich insbesondere aliphatische Alkohole mit ein bis vier Kohlenstoffatomen, wie Methanol, Ethanol, Propanol oder Butanol. Als Ketone eignen sich insbesondere Ketone mit zwei aliphatischen Resten, die ihrerseits ein bis vier Kohlenstoffatome aufweisen, wie Aceton. Ganz besonders bevorzugt wird Wasser als Lösungsmittel eingesetzt. Es lassen sich auch Gemische dieser Lösungsmittel einsetzen.

Beim Trockenformverfahren wird die Ausformlösung durch eine Düse unter Formgebung in einen heißen Gasstrom gepreßt, im heißen Gas verdampft das Lösungsmittel, und die Faser wird mit hoher Geschwindigkeit von der Düse abgezogen. Anschießend wird das geformte Gebilde aufgespult, in Kannen abgelegt oder direkt weiterbehandelt.

Schon während des Ausformens kann langsam die Zersetzung des Zellulosederivates beginnen. Dieser Vorgang kann durch geeignete Katalysatoren beschleunigt werden.

Die Regenierung der so ausgeformten Zellulosefasern kann durch thermische Behandlung und/oder durch chemische Verseifung erfolgen.

Als wasserlösliche Zelluloseester werden Zelluloseformiate oder -acetate, eingesetzt.

Der Substitutionsgrad, der zur Wasserlöslichkeit führt, wird von der eingesetzten Säure bestimmt. Bei Zelluloseacetaten oder Zelluloseformiaten liegt er bei 0,4 - 1,2, vorzugsweise 0,4 - 0,8 Acetylgruppen bzw. Formylgruppen pro Zelluloseeinheit. Wichtig dabei ist eine möglichst statistische Verteilung der Estergruppen über die gesamten polymeren Zellulosemoleküle.

Als Lösungsmittel werden die oben beschriebenen wasserlöslichen Alkohole oder Ketone oder insbesondere Wasser verwendet.

Hohe Temperaturen, vorzugsweise 80 - 100 °C, sind dabei von Vorteil, wenn es die Stabilität der Derivate zuläßt.

Das Lösen kann diskontinuierlich im Rührkessel oder kontinuierlich in Löseanlagen erfolgen, wie sie beispielsweise bei Viskose-Zelluloseacetat- oder Polyacrylnitrilfasern eingesetzt werden. Die geeigneten Konzentrationen hängen von der Kettenlänge der Zelluloseester ab, vorteilhaft für ein konventionelles Trockenspinnen mit Düsendrücken bis 25 bar sind Viskositäten von 100 - 500 Kugelfallsekunden gemessen bei 80 °C. Geeignete Konzentrationen sind dabei 20 - 30 Gewichtsprozente.

Es ist auch sinnvoll, höhere Konzentrationen und höhere Viskositäten zu verspinnen, insbesondere dann, wenn dabei Lösungen mit anisotropen Eigenschaften erhalten werden. Dabei müssen aber Düsen mit höherer Druckfestigkeit - wie z.B. Schmelzspinndüsen eingesetzt werden.

Ganz besonders bevorzugt werden wasserlösliche Zelluloseester eingesetzt, deren Viskosität in 6 Gew.-%iger Lösung bei 25 Grad Celsius 100 - 1000 cps beträgt.

Wenn die Hydrolyse der Zelluloseester thermisch erfolgen soll, können vorteilsweise der Ausformlösung Katalysatoren zugesetzt werden. In Abhängigkeit von der katalytischen Wirkung können diese Katalysatoren schon beim Lösen oder bis erst kurz vor dem Ausformen zugesetzt werden.

Als Katalysatoren eignen sich sowohl Säuren und Basen als auch saure oder basische Metallsalze. Nach dem Lösen wird die Ausformlösung filtriert und heiß gelagert. Beim Einsatz von Katalysatoren kann über die Lagerzeit und die Lagertemperatur die Hydrolyse gesteuert und so der für die Weiterverarbeitung optimale Veresterungsgrad eingestellt werden.

Vor dem Ausformen wird die Ausformmasse auf 110 - 150 °C, vorzugsweise 120-135 °C aufgeheizt und durch die Ausformdüse in das heiße Gas gedrückt.

Beim Ausformen können beispielsweise Düsen eingesetzt werden, die sich beim Trockenspinnen von Acrylfasern bewährt haben. Sowohl Kompakt- als auch Ringdüsen sind geeignet. Die Lochdurchmesser betragen üblicherweise 100-400 µm, vorzugsweise 150-250 µm.

Das heiße Gas wird beispielsweise in einem mantelbeheizten Schacht in Fadenrichtung geführt und bewegt sich in oder gegen die Fadenlaufrichtung. Übliche Gastemperaturen beim Schachteintritt liegen zwischen 250 und 400 °C.

Die Schachtwandtemperatur hängt von dem Durchsatz der Ausformmasse und der Schachtlänge ab. Gas- und Schachtwandtemperatur werden so gesteuert, das das geformte Gebilde beim Verlassen des Schachtes trocken ist, d.h. daß das oder die Fasern untereinander nicht verkleben. Am Schachtende werden die Fasern abgezogen. Übliche Abzugsgeschwindigkeiten liegen zwischen 100 und 800 m/min. Die Geschwindigkeit wird in erster Linie von der Art der Nachbehandlung bestimmt. Beim Aufspulen werden üblicherweise höhere Geschwindigkeiten gewählt, bei einer direkten online Verarbeitung oder einer Zwischenablage in Kannen sind Geschwindigkeiten von 100 - 500 m/min vorteilhaft. Die anschließende Hydrolyse der Zelluloseester kann thermisch und/oder chemisch durchgeführt werden. Das Fasermaterial wird dabei zweckmäßig in Kabelform über eine Bandstraße geführt werden. Filamente können aber auch auf der Spule behandelt werden.

Die thermische Hydrolyse wird bei erhöhten Temperaturen von beispielsweise 100 - 200 °C in Gegenwart von Feuchtigkeit durchgeführt. Die erforderlichen Verweilzeiten werden von den eingesetzten Katalysatoren bestimmt. Sie liegen üblicherweise zwischen 5 min und 1 Stunde, dabei sind aber auch kürzere oder längere Behandlungszeiten möglich.

Geeignete Aggregate sind beheizte Walzen, über die die Faserkabel unter Spannung oder leichter Verstreckung gefahren werden können, oder Band- oder Siebtrommeltrockner, die spannungslos arbeiten.

Die chemische Nachbehandlung erfolgt zweckmäßigerweise im alkalischen Medium, vorzugsweise in alkalischen wässrigen Lösungen. Dabei können, wenn Verklebungen auftreten, höhere Salzkonzentrationen vorteilhaft sein. Es können aber auch wasserfreie oder wasserhaltige organische Lösungsmittel wie beispielsweise Alkohole eingesetzt werden.

Als Basen eignen sich beispielsweise Metallhydroxide wie Natriumhydroxid, Kaliumhydroxid oder Kalziumhydroxide.

Auch andere alkalische Verbindungen, wie beispielsweise Carbonate, insbesondere Natrium- oder Kaliumcarbonate, können verwendet werden.

Die chemische Hydrolyse erfolgt vorzugsweise in heißen Bädern von 40 - 100 °C unter Spannung - gegebenfalls unter leichter Verstreckung oder spannungslos.

Die hydrolysierten Faserkabel oder Spulen, werden anschließend gewaschen und getrocknet.

Eine Trocknung unter Spannung oder auch eine vorgeschaltete Druckdämpfung bei leichter Verstreckung erhöht die Festigkeit der Fasern.

Die anschließende Weiterbehandlung erfolgt nach den für Fasern bekannten Prozeßschritten. Im Falle von Filamenten bzw. Fasern also z.B. Aufbringung einer Drehung bei Filamentgarnen oder Kräuselung und Schneiden von Faserkabel zur Stapelfaserproduktion.

Die erhaltenen regenerierten Zellulosefasern zeichnen sich durch einen hantelförmigen Querschnitt aus.

### Beispiel 1

600 g eines Zelluloseacetats mit einem Acetylgruppengehalt von 5 mMol/g wurden in 1,9 l heißem Wasser bei 95 °C gelöst. Die filtrierte und entgaste Lösung hatte bei 80 °C eine Viskosität von 200 Kugelfallsekunden (Die Bestimmung der Kugelfallviskosität wird in K. Götze, Chemiefasern nach dem Viskoseverfahren, 3. Auflage, 2. Band, S. 1181, beschrieben). Über eine Spinnpumpe wurde die auf 125 °C erhitzte Spinnlösung durch eine Düse mit 50 Loch, Lochdurchmesser 0,15 mm in einen Schacht gepreßt. Das einströmende Gas hatte eine Temperatur von 380 °C, die Temperatur der Schachtwand betrug 280 °C.

Die Fäden wurden mit 150 m/min am Schachtende abgezogen und aufgespult. Es wurden hantelförmige Fasern mit kleinen Verdickungen an beiden Enden erhalten.

Die Fasern waren noch wasserlöslich und hatten folgende Eigenschaften:

| | |
|---|---|
| Titer | 10 dtex |
| Höchstzugkraft | 13 cN/tex |
| Reißdehnung | 25 % |

### Beispiel 2

Eine Spinnlösung aus Beispiel 1 wurde durch eine Düse mit 20 Loch, Lochdurchmesser 0,15 mm, unter den Bedingungen wie Beispiel 1 versponnen, allerdings wurde der Abzug am Schachtende auf 305 m/min erhöht und die Spinnpumpenleistung reduziert, um den gleichen Einzelfasertiter zu erhalten.

Die Fasern waren wasserlöslich und hatten folgende Eigenschaften:

| | |
|---|---|
| Titer | 10 dtex |
| Höchstzugkraft | 15 cN/tex |
| Reißdehnung | 19 % |

### Beispiel 3

Die Fasern aus Beispielen 1 und 2 wurden in 10 %iger methanolischer KOH verseift, mit essigsaurem Wasser neutralisiert und gewaschen. Nach dem spannunglosen Trocknen erhielt man weiße Fasern mit hantelförmigen Querschnitten. Die Fasern bestanden aus unsubstituierter Zellulose.

Folgende Fasereigenschaften wurden gemessen:

| | |
|---|---|
| Titer | 8 dtex |
| Reißfestigkeit | 1 2 cN/tex |
| Reißdehnung | 20 % |

## Patentansprüche

1. Verfahren zur Herstellung von Fasern aus Zellulose umfassend das Ausformen nach einem Trockenformverfahren von wasserlöslichem Zelluloseacetat mit einem Acetylierungsgrad von 0,4 bis 1,2 oder Zelluloseformiat mit einem Formylierungsgrad von 0,4 bis 1,2 aus Ausformlösungen enthaltend als Lösungsmittel wasserlösliche Alkohole, wasserlösliche Ketone oder insbesondere Wasser oder deren Mischungen und die anschließende Regenerierung der Fasern zu Zellulose, wobei Trockenformverfahren bedeutet, daß die Ausformlösung durch eine Düse unter Formgebung in einen heißen Gasstrom gepreßt wird, das Lösungsmittel in heißem Gas verdampft wird und die Faser mit einer Geschwindigkeit von 100 bis 800m/min von der Düse abgezogen wird.

2. Verfahren nach Anspruch 1, dadurch gekennzeichnet, daß die Viskosität des wasserlöslichen Zelluloseesters in 6 Gew.-%iger Lösung bei 25 Grad Celsius 100 - 1000 cps beträgt.

3. Verfahren nach Anspruch 1, dadurch gekennzeichnet, daß die Regenierung der ausgeformten wasserlöslichen Zelluloseester thermisch bei Temperaturen von 100 - 200 °C in Gegenwart von Feuchtigkeit erfolgt.

4. Verfahren nach Anspruch 3, dadurch gekennzeichnet, daß die Regenierung in Gegenwart von Katalysatoren erfolgt, die vorzugsweise der Ausformlösung zugesetzt werden.

5. Verfahren nach Anspruch 1, dadurch gekennzeichnet, daß die Regenerierung der ausgeformten wasserlöslichen Zelluloseester durch Nachbehandlung in alkalischem Medium erfolgt.

## Claims

1. A process for the production of fibers of cellulose comprising shaping, by a dry shaping process, water-soluble cellulose acetate having a degree of acetylation of 0.4 to 1.2 or cellulose formate having a degree of formylation of 0.4 to 1.2 from shaping solutions comprising, as the solvent, water-soluble alcohols, water-soluble ketones or, in particular, water or mixtures thereof and subsequent regeneration of the fibers to give cellulose, dry shaping process meaning that the shaping solution is pressed through a die, with shaping, into a hot stream of gas, the solvent is evaporated in hot gas and the fiber is drawn off from the die at a speed of 100 to 800 m/min.

2. The process as claimed in claim 1, wherein the viscosity of the water-soluble cellulose ester in 6% strength by weight solution at 25 degrees Celsius is 100 - 1000 cps.

3. The process as claimed in claim 1, wherein the regeneration of the shaped water-soluble cellulose esters is carried out by means of heat at a temperature of 100 - 200°C in the presence of moisture.

4. The process as claimed in claim 3, wherein the regeneration is carried out in the presence of a catalyst, which is preferably added to the shaping solution.

5. The process as claimed in claim 1, wherein the regeneration of the shaped water-soluble cellulose esters is carried out by after-treatment in an alkaline medium.

## Revendications

1. Procédé de préparation de fibres de cellulose comprenant le filage selon un procédé de mise en forme à sec à partir d'acétate de cellulose hydrosoluble avec un degré d'acétylation de 0,4 à 1,2 ou à partir de formiate de cellulose avec un degré de formylation de 0,4 à 1,2, à partir de solutions de filage contenant comme solvant des alcools hydrosolubles, des cétones hydrosolubles ou en particulier l'eau ou leurs mélanges, et la régénération ultérieure des fibres pour obtenir la cellulose, le procédé de mise en forme à sec signifiant que la solution de filage passe sous pression à travers une filière et mise en forme en même temps dans un flux de gaz chaud, le solvant étant évaporé dans du gaz chaud et les fibres étant tirées à partir de la filière avec une vitesse de 100 à 800 m/min.

2. Procédé selon la revendication 1, caractérisé en ce que la viscosité de l'ester cellulosique hydrosoluble dans une solution de 6 % en poids est de 100 à 1000 cps à 25 °C.

3. Procédé selon la revendication 1, caractérisé en ce que la régénération des esters cellulosiques hydrosolubles filés est réalisée à chaud à une température de 100 à 200 °C en présence de l'humidité.

4. Procédé selon la revendication 3, caractérisé en ce que la régénération est réalisée en présence de catalyseurs, que l'on ajoute de préférence à la solution de filage.

5. Procédé selon la revendication 1, caractérisé en ce que la régénération des esters cellulosiques hydrosolubles filés est réalisée par un post-traitement en milieu alcalin.
